# DEMANDE DE BREVET EUROPEEN

(11) **EP 4 071 558 A1**
(43) Date de publication de la demande: **12.10.2022**
(21) Numéro de dépôt: 22164739.9
(22) Date de dépôt: 28.03.2022
(51) Int. Cl.: G04B 13/02, B23K 26/0622, G04B 19/10, G04B 19/12, G04B 19/28, G04B 29/02, G04B 31/06, G04B 47/00, B23K 26/352, B44C 1/22, G04D 3/00

(54) **PROCÉDÉ DE FABRICATION D'UN COMPOSANT HORLOGER PAR STRUCTURATION DE SURFACE**

(30) Priorité: 06.04.2021 EP 21167068
(71) Demandeur: ROLEX SA, 1211 Genève 26 (CH)
(72) Inventeur: LINSTRUMENT, Christophe, 74130 BONNEVILLE (FR); MORETTI, Nicolas, 74270 CHILLY (FR); PAILLOT, Christophe, 74140 SCIEZ (FR); RIBOLI, David, 74380 ARTHAZ (FR); TINANT, Yoan, 74500 NEUVECELLE (FR)
(74) Mandataire: Moinas & Savoye SARL

(57) **Abrégé**

Procédé de fabrication d'un composant horloger comprenant une surface à traiter, cette surface étant préalablement préparée par une sous-étape de polissage et/ou par une sous-étape d'ajout d'une couche malléable (2) supérieure, caractérisé en ce qu'il comprend les étapes suivantes :
- Première structuration de surface (E10) de ladite surface à traiter du composant horloger, puis
- Deuxième structuration de surface (E20) de ladite surface à traiter structurée par l'étape précédente de première structuration de surface (E10).

## Description

L'invention concerne un procédé de fabrication d'un composant horloger, notamment un composant horloger de montre. Elle concerne aussi un composant horloger en tant que tel obtenu par la mise en œuvre d'un tel procédé. Enfin, l'invention concerne aussi une pièce d'horlogerie, notamment une montre, par exemple une montre bracelet, comprenant un tel composant horloger.

Lorsque l'on souhaite réaliser une finition particulière d'une surface d'un composant horloger, par exemple pour former des zones d'identification et/ou une indexation et/ou des décorations sur un cadran, il est connu de travailler la surface afin de lui donner une structure, dite structuration de surface, traditionnellement par des procédés comme le meulage, le brossage ou le diamantage par exemple. Cette étape peut être combinée à plusieurs étapes de mise en couleur telles que le vernissage, la galvanoplastie ou le dépôt PVD, pour former respectivement des zones de couleur différente sur la surface du composant horloger. En complément, des étapes d'ajout d'inserts, et/ou de collage d'éléments décoratifs rapportés sont parfois mises en œuvre.

En remarque, les solutions de finition d'une surface d'un composant horloger sont très délicates car les applications horlogères sont très exigeantes : l'aspect recherché, à la fois fonctionnel et esthétique, est très important, doit être très précis, reproductible, et naturellement exempt de défauts ou de bavures. Les exigences au niveau de la robustesse sont également élevées, car les composants ainsi formés sont susceptibles d'être des composants d'habillement soumis aux chocs et à l'environnement parfois agressif (eau de mer, sueur, etc.).

Le but de l'invention est de fournir un procédé de fabrication d'un composant horloger, notamment un cadran, qui permet d'atteindre de manière simple un aspect nouveau, précis et attractif, avec une grande versatilité et durable dans le temps.

A cet effet, l'invention porte sur un procédé de fabrication d'un composant horloger comprenant une surface à traiter, cette surface étant optionnellement préalablement préparée par une sous-étape de polissage et/ou par une sous-étape d'ajout d'une couche malléable supérieure, caractérisé en ce qu'il comprend les étapes suivantes :
- Première structuration de surface de ladite surface à traiter du composant horloger, puis
- Deuxième structuration de surface de ladite surface à traiter structurée par l'étape précédente de première structuration de surface.

Un procédé de fabrication, un composant horloger et une pièce d'horlogerie selon l'invention sont particulièrement définis par les revendications.

Ces objets, caractéristiques et avantages de la présente invention seront exposés en détail dans la description suivante d'un mode de réalisation particulier fait à titre non-limitatif en relation avec les figures jointes parmi lesquelles :
La figure 1 représente schématiquement en coupe une étape préalable de préparation d'une plaque de cadran selon un mode de réalisation de l'invention.
La figure 2 représente schématiquement une vue en coupe de la plaque de cadran après réalisation d'une première étape du procédé selon le mode de réalisation de l'invention.
La figure 3 représente schématiquement une vue en coupe de la plaque de cadran après réalisation d'une première variante d'une deuxième étape du procédé selon le mode de réalisation de l'invention.
La figure 4 représente schématiquement une vue en coupe de la plaque de cadran après réalisation d'une deuxième variante d'une deuxième étape du procédé selon le mode de réalisation de l'invention.
La figure 5 représente schématiquement en vue de dessus une plaque de cadran selon le mode de réalisation de l'invention.
La figure 6 représente schématiquement une vue en coupe de la plaque de cadran après réalisation d'une étape de coloration de la première variante du procédé selon le mode de réalisation de l'invention.
La figure 7 représente schématiquement une vue en coupe de la plaque de cadran après réalisation d'une étape de coloration de la deuxième variante du procédé selon le mode de réalisation de l'invention.
La figure 8 représente schématiquement une vue en coupe de la plaque de cadran après réalisation d'une autre variante du procédé selon le mode de réalisation de l'invention.

Selon le mode de réalisation du procédé de fabrication d'un composant horloger de l'invention, on utilise une combinaison particulière d'au moins deux étapes de structuration de surface, en appliquant au moins deux étapes de structuration de surface de manière superposée sur une même zone d'une surface à traiter d'un composant horloger.

Les exigences et la complexité des opérations de structuration de surface font qu'il était considéré comme non réaliste de combiner deux opérations de structuration de surface sur une même surface, la deuxième étape de structuration de surface étant alors supposée dégrader le résultat obtenu par la première étape de structuration de surface et lui faire perdre tout son bénéfice. Par exemple, certaines combinaisons de structurations de surface ne pourraient pas être obtenues par des méthodes traditionnelles de l'état de la technique, comme des stries dans des directions différentes ou des sablages avec des impacts plus fins que des médias traditionnels, ainsi que certaines configurations de délimitations de décors en creux (avec une profondeur supérieure à l'épaisseur d'une couche malléable par exemple, et sans altérer les texturations de surface). Ce préjugé est ici surmonté par l'invention, comme cela va être détaillé par la suite. L'invention démontre que cette combinaison apporte même un gain allant au-delà de la simple combinaison d'étapes de traitement de surface.

Nous dénommerons « structuration de surface », ou en variante « texturation de surface », une étape procédant à une modification de la topographie de la surface d'un composant en modifiant sa rugosité. Nous appellerons « texturation » l'état de surface obtenu par une ou plusieurs étapes de structurations de surface. En remarque, une telle étape de structuration de surface se différencie des étapes d'ajout et d'enlèvement de matière, qui procèdent à des réalisations de reliefs plus importants dans l'épaisseur d'un composant. Une étape de structuration de surface agit donc en surface uniquement, sur une très faible profondeur, sans ou avec très peu d'enlèvement de matière.

Nous utiliserons l'adjectif « supérieur » pour dénommer une surface ou un volume orienté du côté d'une surface destinée à être traitée par le procédé selon l'invention. Ce dernier s'applique donc sur une surface à traiter qui s'étend sur tout ou partie de la surface supérieure d'un composant horloger. Avantageusement, il s'agira d'une surface visible d'un composant horloger. Par exemple, dans le cas d'un cadran, la surface supérieure qui est traitée par l'invention est la surface qui sera visible par un porteur d'une montre comprenant ce cadran.

Autrement dit, la structuration de surface réalise une topographie peu profonde en venant rayer de façon contrôlée, potentiellement aléatoire, la surface supérieure du composant horloger ; alternativement, en venant sabler ou gicler la surface avec des médias abrasifs. Les outils utilisés peuvent être par exemple des tampons recouverts d'abrasif ou des brosses, ou peuvent être des systèmes de sablage ou de giclage, ou des lasers, comme des lasers femtoseconde ou des lasers nanoseconde.

Selon un mode de réalisation, une structuration de surface réalise des reliefs en creux par rapport à une surface initiale d'un composant, de profondeur moyenne inférieure ou égale à 0.1 µm, voire en variante inférieure ou égale à 0.3 µm, voire inférieure ou égale à 0.8 µm, voire inférieure ou égale à 1 µm, voire inférieure ou égale à 1.5 µm, voire inférieure ou égale à 3 µm, voire inférieure ou égale à 4 µm. La profondeur d'un relief en une zone donnée d'une surface est la distance entre le point le plus bas du relief et la surface initiale. La profondeur moyenne est par définition la moyenne des profondeurs sur une surface traitée. D'autre part, une telle structuration de surface réalise de préférence des reliefs de profondeur moyenne supérieure ou égale à 0.05 µm.

Selon un mode de réalisation, une étape de structuration de surface forme une rugosité surfacique comprise de préférence entre 0.05 µm et 4 µm, voire 0.05 µm et 3 µm, voire entre 0.1 µm et 1.5 µm, voire entre 0.05 µm et 0.1 µm. En remarque, la rugosité peut se mesurer à partir des paramètres d'états de surface surfacique, en appliquant la norme ISO 25178, tels que :
Sq : paramètre de hauteur correspondant à l'écart moyen quadratique (moyenne quadratique des hauteurs à l'intérieur de l'aire de base) ; ou
Sz : paramètre de hauteur correspondant à l'amplitude maximale de la surface (somme de la hauteur maximale de pic et de la profondeur maximale de creux, à l'intérieur d'une aire de base).

Selon un mode de réalisation, une structuration de surface peut former des stries ou des rayures, voire d'autres formes en retrait de la surface à traiter, selon une faible profondeur susmentionnée et/ou de manière à former une faible rugosité de surface. Selon un mode de réalisation, ces stries sont de préférence suffisamment denses, régulières et/ou organisées, et/ou formant une trame particulière, procurant un aspect visuel attrayant. A titre d'exemple avantageux, la densité des stries est telle que deux stries voisines sont séparées d'une distance moyenne inférieure ou égale à 10 µm par exemple, voire inférieure ou égale à 3 µm par exemple.

L'invention va maintenant être illustrée de manière non limitative dans le cadre de la terminaison de la surface d'un cadran de montre. Elle pourrait naturellement être utilisée pour traiter toute surface d'un autre composant horloger, d'une montre-bracelet ou d'un mouvement horloger, comme par exemple et de façon non limitative, une lunette, des ébauches et des fournitures de mouvements, notamment des couvercles, des tambours de barillet ou des rochets.

L'invention porte plus précisément sur une phase de traitement de surface d'un composant horloger, et intervient de préférence vers la fin de la fabrication d'un composant horloger. Elle participe donc à la fabrication d'un composant horloger.

Le procédé selon le mode de réalisation de l'invention comprend une étape préalable optionnelle de préparation de la surface du composant horloger.

Pour cela, la surface supérieure, c'est-à-dire destinée à être traitée et donc de préférence destinée à être visible, d'une plaque de cadran en laiton est préparée par une première sous-étape de préparation, par exemple de polissage, optionnelle, avant, voire après, une deuxième sous-étape de dépôt d'une couche malléable, de même optionnelle. Alternativement, une plaque de cadran en laiton est préparée par une première sous-étape de dépôt d'une couche malléable, optionnelle, avant une deuxième sous-étape de préparation, par exemple de polissage, de même optionnelle. Nous appelons « couche malléable » une couche se présentant dans un matériau métallique suffisamment mou, en particulier à froid, pour faciliter des étapes de structuration de surface, telles que celles qui vont être décrites plus loin, et ductile, afin de conserver la déformation appliquée. Une telle couche malléable comprend donc avantageusement un matériau métallique malléable, parmi lesquels l'argent ou l'or, ou les alliages d'argent ou d'or comprenant respectivement au moins 50% en poids d'argent ou d'or. En variante, la plaque de cadran, ou tout autre composant horloger à décorer, peut se trouver dans un autre matériau métallique, le terme métallique incluant un métal pur ou tout alliage métallique, comme en acier, en titane, en or non malléable (c'est-à-dire comprenant moins de 50% en poids d'or) ou en platine. Alternativement, on pourrait aussi imaginer utiliser une plaque en céramique, par exemple en zircone ou en alumine, en silicium, en verre, en saphir, en nacre ou en matériau minéral, dont le fond montre la couleur naturelle du matériau ou est coloré en une couleur donnée, par exemple en blanc.

Autrement dit, selon un premier mode de réalisation, le composant horloger comprend une surface supérieure en matériau rigide, c'est-à-dire appartenant à une couche supérieure en matériau rigide (non malléable), au sein duquel la double structuration de surface de l'invention est directement réalisée. Selon un deuxième mode de réalisation, le composant horloger comprend une couche supérieure en matériau rigide, et le procédé selon l'invention met en œuvre une étape préalable de dépôt d'une couche malléable sur ladite couche en matériau rigide, de sorte que l'invention (les au moins deux structurations superposées) sera mise en œuvre sur ladite couche en matériau malléable recouvrant la couche en matériau rigide. Ladite couche en matériau malléable forme alors la nouvelle couche supérieure du composant horloger. Selon un troisième mode de réalisation, le composant horloger comprend directement une surface en matériau malléable, c'est-à-dire au moins une couche de surface en matériau malléable, au sein duquel la double structuration de surface de l'invention est directement réalisée, naturellement sans besoin de procéder à la mise en œuvre de l'étape préalable optionnelle d'addition d'une couche malléable. Il peut ainsi par exemple se présenter sous une forme massive, monobloc, en une seule couche dudit matériau malléable. En variante, il peut présenter plusieurs couches superposées en matériau malléable, par exemple une couche à base d'argent recouvrant une couche à base d'or. En remarque, une couche du composant horloger peut donc être un simple revêtement ou une couche plus épaisse et massive.

A titre d'exemple de réalisation détaillée, une plaque de cadran en laiton plane et polie peut subir les différentes sous-étapes suivantes de dépôt de :
a) Une première couche de nickel, par exemple de 2 micromètres d'épaisseur, par électrodéposition, de manière uniforme, puis,
b) Une couche de dorage, par exemple de 0.2 micromètre d'épaisseur, par électrodéposition, de manière uniforme, puis,
c) Une couche d'argent, par exemple de 4 micromètres d'épaisseur, par électrodéposition, de manière uniforme.

Dans cet exemple, on obtient ainsi une couche malléable comprenant plusieurs couches, et donc multicouche, d'épaisseur totale de 6.2 micromètres, comprenant une couche supérieure particulièrement malléable d'argent. Plus généralement, il sera intéressant de déposer une couche malléable, multicouche ou monocouche, d'épaisseur inférieure ou égale à 10 µm, voire inférieure ou égale à 7 µm.

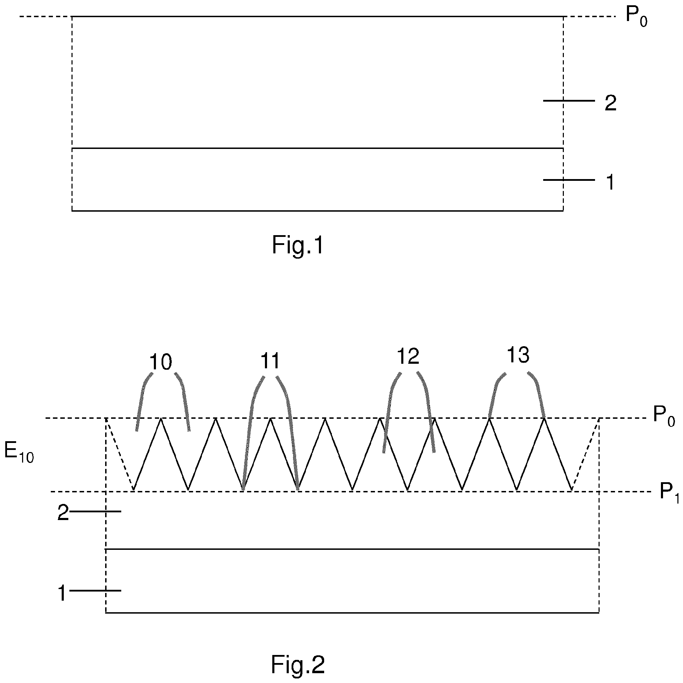

La figure 1 illustre schématiquement une section verticale d'une telle plaque de cadran, formée d'une partie inférieure 1 en laiton, recouverte d'une couche malléable 2 supérieure en argent. Les éventuelles sous-couches ne sont pas représentées pour simplifier la représentation. D'autre part, l'épaisseur de la couche malléable 2 est volontairement exagérée pour faciliter l'illustration de l'invention, et ne respecte donc pas une échelle réelle. La surface supérieure de la couche malléable 2 est plane, dans un plan qui formera un plan de référence P₀ pour la suite de la description. Le cadran pourrait comprendre tout autre nombre de couches en matériaux différents, une seule couche, ou deux, trois, quatre, cinq ou plus.

Le procédé de fabrication met alors en œuvre une première étape E10 de première structuration de surface de la surface à traiter du cadran. Selon un mode de réalisation avantageux, cette première structuration forme des premières stries 10. Le résultat de cette première structuration de surface est illustré par la figure 2, qui représente une vue selon une section verticale dans un plan sensiblement perpendiculaire à la plaque de cadran et perpendiculaire aux stries 10. Elle permet d'illustrer une section transversale des stries 10 de ce décor fictif. Ces stries 10 sont formées dans la surface supérieure du cadran, plus précisément dans la couche malléable 2. En effet, dans ce mode de réalisation, la couche d'argent est texturée, d'une décoration formée de stries.

Selon le mode de réalisation illustré, les stries 10 présentent une section transverse triangulaire. De plus, les stries 10 sont avantageusement très rapprochées. Ainsi, la section transverse entre deux stries 10 forme des nervures 12 présentant de même une section transverse triangulaire, dont le sommet 13 se trouve sensiblement dans le plan de référence P₀. Selon une réalisation avantageuse, les stries 10 sont entièrement formées dans la couche malléable 2 en argent, c'est-à-dire que leur partie la plus profonde, formant le fond 11 des stries 10, se trouve dans la couche malléable 2. Selon le mode de réalisation, le fond 11 de toutes les stries 10 se trouve dans un même deuxième plan P₁ localisé dans la couche malléable 2, sensiblement parallèle au plan de référence P₀. Autrement dit, le fond des stries 10 n'atteint pas le fond de la couche malléable 2, n'atteint pas la partie inférieure 1 en laiton de la plaque de cadran. Selon le mode de réalisation, la profondeur de cette texturation est de l'ordre de 0.5 µm. En remarque, cette première étape de première structuration de surface E10 peut être appliquée sur tout ou partie de la surface supérieure de la plaque de cadran.

Naturellement, les stries et/ou nervures intermédiaires peuvent présenter d'autres formes, notamment d'autres sections, que celles représentées. Elles peuvent de plus être avantageusement rapprochées, présenter un espacement moyen inférieur ou égal à 10 µm, voire inférieur ou égal à 5 µm, voire inférieur ou égal à 1 µm, et/ou compris entre 0.5 µm et 30 µm, voire entre 1 et 20 µm, voire entre 1 et 10 µm.

Optionnellement, on procède ensuite à une étape de dépôt d'une couche de dorage de 0.2 µm d'épaisseur, par électrodéposition, de manière uniforme, de manière à protéger la surface en argent : cela permet d'éviter l'altération, l'oxydation, la sulfuration de l'argent texturé. Ce dépôt est conforme, c'est-à-dire qu'il conserve la topographie de la texturation de la surface traitée par l'étape de première structuration de surface, sur laquelle est déposé l'or. Alternativement, un fin dépôt conforme par une technique de dépôt par couche atomique (ALD) peut être mis en œuvre. Cette étape est optionnelle et non illustrée. Cette étape optionnelle de dépôt d'une couche de dorage, alternativement d'une autre couche de protection, peut avoir lieu avant et/ou après chaque étape de structuration (E10, E20, et les étapes de structuration additionnelles optionnelles).

Le procédé de fabrication selon le mode de réalisation de l'invention met alors en œuvre une deuxième étape E20 de deuxième structuration de surface de la surface à traiter du cadran. Cette deuxième structuration de surface est réalisée au moins sur une partie de la surface déjà traitée par la première structuration de surface, de sorte que l'effet des deux structurations de surface est superposé et combiné, comme cela va être détaillé. Par cette superposition, la deuxième structuration de surface vient modifier une partie de la rugosité formée par la première structuration de surface. Elle peut par exemple modifier la crête de rugosité de la première structuration de surface, sans modifier le fond de la première structuration de surface, comme cela va être illustré ci-dessous.

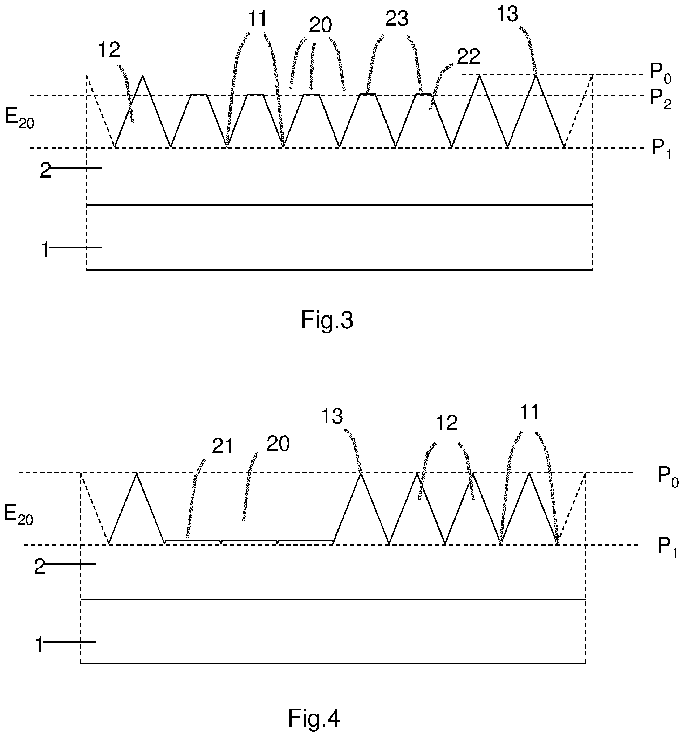

Le résultat de cette deuxième structuration de surface selon le mode de réalisation est illustré par la figure 3. La deuxième structuration de surface forme des deuxièmes stries 20 dont l'orientation est différente de celles des premières stries 10 formées par la première structuration de surface. Elles croisent donc les stries de la première structuration de surface. Particulièrement, la deuxième structuration a pour effet de venir écrêter une partie des nervures 12 présentes entre les premières stries 10 formées par la première structuration de surface. Il en résulte qu'une partie de ces nervures 12, dites nervures écrêtées 22, présente une section modifiée.

La figure 3 illustre la section de la plaque de cadran par un plan vertical comprenant une deuxième strie 20 réalisée par une première variante de la deuxième structuration de surface. Cette strie permet d'écrêter plusieurs nervures 12 juxtaposées formées par la première structuration de surface. Il apparaît en effet que les sommets des nervures écrêtées 22 sont tronqués, de manière équivalente entre eux. De ce fait, les nervures 12 de la première structuration de surface sont transformées en des nervures écrêtées 22 présentant une section transverse trapézoïdale, dont la surface supérieure 23 forme une surface plane, sensiblement parallèle à la plaque de cadran, dans un plan intermédiaire P₂ inférieur au plan de référence P₀ comprenant les sommets 13 des nervures 12 initiales. Selon le mode de réalisation, le plan intermédiaire P₂ est positionné entre le plan de référence P₀ et le premier plan P₁, de manière parallèle.

Selon le mode de réalisation, certaines des stries 10 et des nervures 12 réalisées par la première structuration restent inchangées. En remarque, la deuxième structuration de surface peut être appliquée sur tout ou partie de la surface traitée par la première structuration de surface.

D'autre part, selon cette réalisation avantageuse, la deuxième structuration de surface réalise un traitement de surface sur une profondeur inférieure à celle de la première structuration, de sorte qu'elle n'agit que partiellement sur la première structuration, laissant notamment le fond 11 de toutes les stries 10 intact. La profondeur de la première structuration de surface correspond à la distance entre les plans P₀ et P₁, alors que la profondeur de la deuxième structuration de surface correspond à la distance entre les plans P₀ et P₂.

Selon un mode de réalisation, l'étape de deuxième structuration de surface est mise en œuvre par un giclage au travers d'un masque, ce qui a pour effet d'abraser légèrement les pics du décor, c'est-à-dire les sommets 13 des nervures 12, comme décrit précédemment. Le giclage est réalisé de manière traditionnelle, par giclage humide ; alternativement, il pourrait être réalisé par sablage. Selon le mode de réalisation, la profondeur de l'étape de giclage est de l'ordre de 0.2 µm. Visuellement, l'aspect du décor disparaît localement au profit d'une structure d'aspect uniforme rugueux. Selon le mode de réalisation, l'étape de deuxième structuration de surface agit donc sur une partie seulement de la surface traitée par la première structuration de surface, cette partie étant définie par le masque utilisé pour protéger les zones de la surface à traiter qu'on ne souhaite pas modifier, c'est-à-dire de sorte à préserver intact le décor réalisé. A titre d'exemple, ce masque peut être constitué d'une résine photosensible. La deuxième structuration de surface n'agit donc que sur les zones non masquées, de sorte à atténuer localement et de manière maîtrisée la première texturation.

Alternativement, l'étape de deuxième structuration de surface peut être réalisée à l'aide d'un laser. Avec cette technique, non seulement le masquage est inutile, mais la résolution des texturations est extrêmement précise. L'utilisation du laser permet, outre l'écrêtage des reliefs de la texturation, potentiellement à plusieurs niveaux, de créer par exemple des délimitations de décors en creux lors de la même étape. Enfin, l'utilisation d'un laser permet de former un dégradé de l'effet de texturation. On utilise préférentiellement un laser femtoseconde, en jouant sur différents paramètres pour créer l'effet optique recherché. Les paramètres considérés sont notamment la puissance, le diamètre du faisceau, la fluence, la vitesse de balayage de la surface, le taux de recouvrement longitudinal et latéral des impulsions au cours de leur déplacement, le taux de répétition des impulsions, l'énergie moyenne par impulsion, la durée d'impulsion, la longueur d'onde du faisceau, ainsi que la défocalisation. On peut induire des variations supplémentaires en fonction des stratégies de balayage et des trajectoires : on peut effectuer un balayage dans une direction (appelé balayage « hatch » ou « simple hatch »), ou on peut effectuer un balayage dans une première direction puis dans une autre direction, par exemple perpendiculaire (« cross-hatch 0°-90 ») ou à 120° (« cross-hatch 0°-120 »), ce qui génère des faisceaux de trajectoires superposés et ayant des orientations différentes. Par exemple, un écrêtage total / partiel est dosé en influant sur les différents paramètres laser qui permettent de doser la quantité d'énergie apportée par unité de temps et de surface, et donc de doser l'impact du laser, ainsi que sur les stratégies de balayage.

On peut aussi noter que le laser femtoseconde peut permettre de texturer tout en translatant par « enfoncement » partiellement la topographie sur laquelle il est appliqué, de façon en partie « conforme » (c'est-à-dire en la reproduisant). Ainsi, selon une autre réalisation que celle représentée, la deuxième structuration de surface peut être réalisée avec un laser femtoseconde, de sorte à générer un enfoncement partiel de la première texturation formée par la première structuration de surface, de manière en partie conforme.

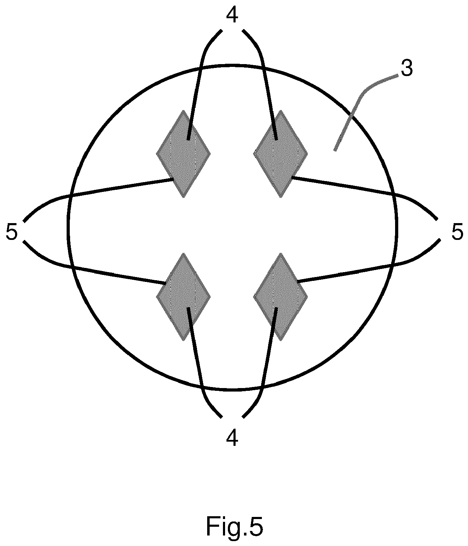

La deuxième structuration de surface peut donc être appliquée dans des zones prédéfinies, délimitées par des contours quelconques, par exemple des formes régulières comme des polygones. Ces zones se situent à un emplacement préalablement texturé. La figure 5 illustre à titre d'exemple une vue de dessus d'un cadran résultant d'une telle réalisation, dont la surface comprend une zone 3 soleillée, résultant de la seule première structuration de surface, et des zones 4 comprenant la double structuration de surface.

Optionnellement, le pourtour de ces zones 4 est souligné par un sillon 5 également réalisé au laser. Dans cet exemple, pour former un effet de profondeur, le sillon 5 est suffisamment profond pour percer toute la couche malléable 2 et atteindre le laiton de la partie inférieure 1 de la plaque de cadran. Selon le mode de réalisation, la profondeur du sillon 5 est de 10 µm. Plus généralement, un laser peut donc optionnellement être utilisé pour réaliser un gravage profond sur la surface traitée par la double structuration de surface ou sur la surface du cadran dont une partie est traitée par la double structuration de surface, selon une profondeur supérieure ou égale à 5 µm, voire supérieure ou égale à 10 µm, et/ou inférieure ou égale à 15 µm. Naturellement, ce gravage profond n'est pas une structuration de surface. Ainsi, avantageusement, l'étape de gravage profond est appliquée au moins en partie sur le contour de la zone de ladite surface à traiter ayant subi la deuxième structuration de surface et/ou au moins en partie superposée à la première structuration de surface et/ou à la deuxième structuration de surface.

En deuxième variante de réalisation, illustrée par la figure 4, la deuxième structuration de surface est plus profonde que celle illustrée par la réalisation correspondant à la figure 3, permettant un écrêtage quasiment total ou total d'une partie de la surface traitée par la première structuration. Ainsi, comme représenté, la deuxième structuration permet de supprimer complètement une partie des nervures 12 formées par la première structuration, creusant ainsi jusqu'au plan P₁. Dans cette réalisation, la deuxième structuration peut former des deuxièmes stries 20 dont le fond 21 se trouve dans le plan P1, selon une profondeur identique à celle de la première structuration de surface.

Le procédé met ensuite en œuvre une étape E30, optionnelle, de coloration de la surface supérieure du cadran par le dépôt d'un revêtement 30. De préférence, cette étape s'applique de manière uniforme sur toute la surface à traiter, et même sur toute la surface du composant horloger, c'est-à-dire du cadran dans ce mode de réalisation. Pour cela, le mode de réalisation met en œuvre le dépôt d'un revêtement très fin, de quelques nanomètres d'épaisseur, par la technique ALD. Le matériau déposé peut être quelconque, par exemple choisi pour induire une coloration particulière. Il peut s'agir d'un métal noble ; en variante, il peut s'agir d'un oxyde métallique. En variante, il est possible de procéder à un dépôt uniforme d'un revêtement, par dépôt galvanique, par dépôt physique en phase vapeur (PVD), par PLD (Pulsed Laser Déposition), ou par dépôt chimique en phase vapeur (CVD). Le revêtement est choisi (technique de dépôt, épaisseur, matériau, ...) de sorte à ne pas perdre la topographie formée par la double structuration de surface.

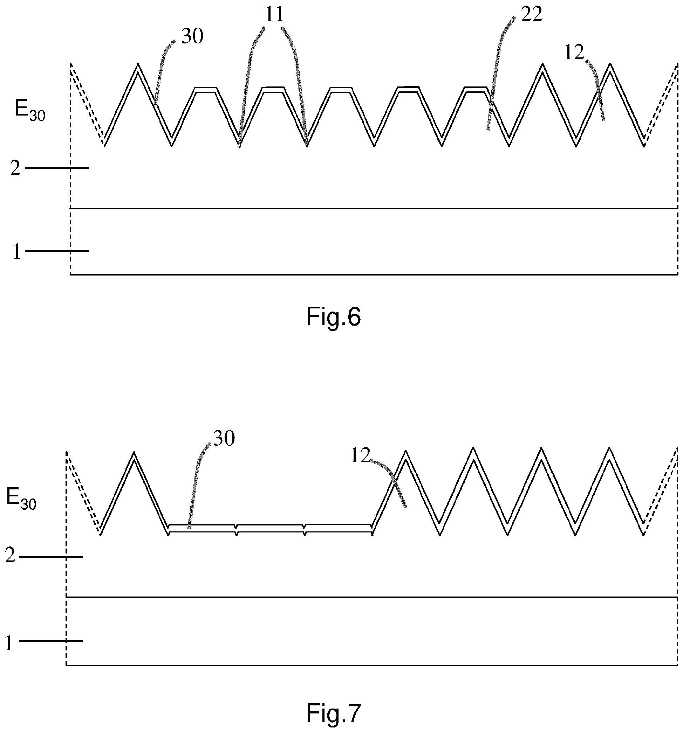

Comme représenté par les figures 6 et 7, qui correspondent respectivement aux réalisations des figures 3 et 4, un revêtement 30 épouse parfaitement la topographie de la surface supérieure du cadran, notamment ne modifie pas, ou de manière négligeable, la rugosité et/ou les reliefs formés par les deux étapes de structuration E10, E20.

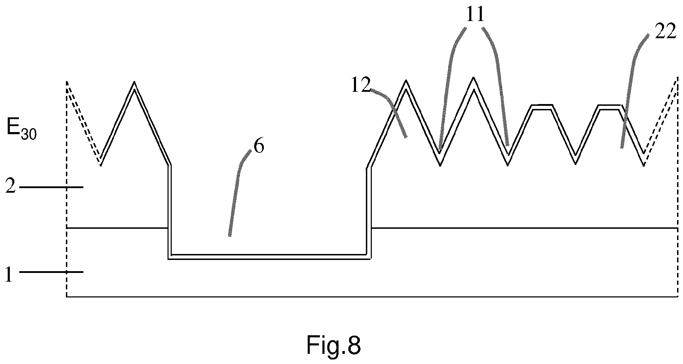

La figure 8 illustre un autre mode de réalisation dans lequel un gravage profond est réalisé de manière additionnelle aux deux structurations de surface. Dans ce mode de réalisation, des zones 6 sont réalisées au laser, notamment un laser nanoseconde, sur un cadran issu d'une préparation de deuxième structuration de surface selon le mode de réalisation illustré par la figure 3. Dans cet exemple, pour former un effet de profondeur, les zones 6 sont suffisamment profondes pour percer toute la couche malléable 2 et atteindre le laiton de la partie inférieure1 de la plaque de cadran. Selon ce mode de réalisation, la profondeur des zones 6 est de 10 µm. Plus généralement, un laser peut donc optionnellement être utilisé pour réaliser un gravage profond sur la surface traitée par la première et/ou la double structuration de surface, selon une profondeur supérieure ou égale à 5 µm, voire supérieure ou égale à 10 µm. Naturellement, ce gravage profond n'est pas une structuration de surface. Un revêtement 30 épouse ensuite parfaitement la topographie de la surface supérieure du cadran, notamment ne modifie pas, ou de manière négligeable, la rugosité et/ou les reliefs formés par les deux étapes de structuration E10, E20 et de gravage profond. Ce gravage profond peut comprendre des stries et/ou former tout dessin.

Il est intéressant de noter qu'avec une seule étape de coloration, on obtient plusieurs aspects différents, grâce à la double structuration de surface. Il est en effet possible de mettre en œuvre des légères variations de cette double structuration de surface sur des zones différentes de la surface d'un composant horloger, pour atteindre des aspects qui diffèrent à l'œil nu. Ainsi, cette double structuration de surface, qui forme une simple texturation de surface, donc sur une profondeur très faible, permet de produire des effets optiques particulièrement intéressants. Notamment, la luminosité L* des zones traitées différemment varie légèrement. Des mesures de colorimétrie réalisées dans différentes zones d'un cadran montrent une différence de luminosité due à la différence de rugosité ou plus généralement d'état de surface, qui peut osciller entre 2 et 5. La luminosité L* est évaluée dans l'espace défini par la Commission Internationale de l'Eclairage, CIE L*a*b*, comme indiqué dans le « Technical Report of Colorimetry » CIE 15 : 2004. Les mesures sont réalisées en mode SCI (Specular Component Included). L'écart de luminosité est ΔL*=L₁*-L₀* où les indices « 1 » et « 0 » désignent deux emplacements à comparer du cadran.

Un avantage de l'invention est donc qu'une seule et même étape de coloration induit des effets colorés différents et/ou une luminosité différente et/ou un effet optique différent sur respectivement au moins deux zones différentes de ladite surface à traiter, ce qui simplifie la fabrication globale. En remarque, un tel effet de différenciation optique est aussi obtenu sans aucune étape de coloration.

Enfin, optionnellement, le procédé met ensuite en œuvre le dépôt d'une couche polymérique de protection, par exemple de zapon de 6 µm. En complément, optionnellement, le cadran peut subir toute autre étape de finition, comme une tampographie, par exemple pour souligner différentes zones ayant subi la double structuration de surface de l'invention, et/ou une impression de marques.

En variante de réalisation, le procédé peut mettre en œuvre au moins une troisième étape de structuration de surface additionnelle, suite aux deux structurations de surface E10, E20. Avantageusement, cette troisième structuration de surface vient écrêter tout ou partie de la deuxième structuration de surface, sans impacter la première structuration de surface. Alternativement, elle peut atteindre la première structuration de surface dans des zones où la deuxième structuration de surface n'a pas été appliquée. Cette troisième étape peut être répétée au besoin, pour former une multitude de zones traitées différemment.

Naturellement, l'invention ne porte pas sur le dessin réalisé par les étapes de structuration de surface, qui permettent de former tout tracé, en particulier des lignes, voire des courbes, par exemple parallèles ou sensiblement parallèles. A titre d'exemple, la surface à décorer peut être partagée en différentes zones, chaque zone comprenant une deuxième structuration de surface différente, par exemple comprenant des stries d'orientations différentes, pouvant par exemple être perpendiculaires entre elles, ou présentant une rugosité et/ou une orientation différente. Avantageusement, une première structuration de surface comprend des stries, parallèles ou non, et une deuxième structuration de surface, superposée à la première, forme un motif particulier, comme le dessin d'une plante ou d'un animal, ou une écriture, d'une marque par exemple, dont les rainures formant le motif particulier croisent une ou des stries de la première structuration de surface.

De plus, l'invention ne se limite pas à l'exemple illustré. Notamment, les étapes de structurations de surface peuvent être mises en œuvre selon une multitude de solutions, restant de préférence au sein de la couche malléable (sans ajout de matière, par exemple par une technique de type PVD, CVD, ...). Pour cela, les solutions suivantes peuvent être utilisées :
- Les techniques visant à abaisser la rugosité de la surface sur laquelle elles sont appliquées, telles que le polissage, ou telles que, dans certaines conditions, le sablage, le grenaillage, le microbillage, ou telles que, dans certaines conditions le laser, dont le laser femtoseconde ou nanoseconde ;
- Les techniques visant à augmenter la rugosité de la surface sur laquelle elles sont appliquées, telles que, dans certaines conditions, le sablage, le grenaillage, le microbillage, ou telles que, dans certaines conditions le laser, dont le laser femtoseconde ou nanoseconde ;
- Les techniques dites à traits tirés, telles que le satinage, le brossage, le colimaçonnage, le soleillage, les Côtes de Genève, qui visent à créer des stries (qui peuvent être obtenues de manière traditionnelle ou avec un laser) ; on peut préciser notamment :
   ∘ Le colimaçonnage, qui est un décor en forme de spirale, généralement effectué sur les rochets des barillets, les masses oscillantes, les barillets ou encore les couvercles de barillets, mais qui peut être envisagé sur un cadran. Cette décoration est obtenue au moyen d'une meule que l'on fait tourner sur la surface de la pièce en l'orientant de manière à obtenir des traits en forme de spirale ;
   ∘ Le soleillage, qui est une décoration formée de lignes ayant un même point d'intersection, donnant à la pièce l'aspect d'un soleil, comme mentionné dans le mode de réalisation décrit ;
   ∘ Les Côtes de Genève, qui forment un motif de zones brossées en bandes. Il est possible de varier la largeur, la finesse, l'angle et l'écart, plus ou moins prononcé, entre les bandes de côtes. Selon un mouvement de va et vient, l'abrasif ou la brosse marque la surface de stries parallèles, droites ou circulaires, qui forment les côtes ;
- Les techniques de perlage, de cerclage. Le perlage est un décor formé de cercles à traits concentriques très rapprochés, voire empiétant les uns sur les autres. Il orne couramment les ponts, les platines, les fonds de noyures et les cadrans. Ils peuvent être obtenus de manière traditionnelle ou avec un laser.

On peut bien entendu imaginer utiliser une autre technique que celles mentionnées ci-dessus, dans cette étape de structuration de surface, selon l'aspect final que l'on souhaite donner au cadran. A titre d'exemple, voici d'autres techniques possibles pouvant être mises en œuvre dans ce traitement de surface :
- Le satinage, le brossage, le giclage, qui donnent une texture très fine et peu profonde ;
- L'azurage, consistant en la réalisation de fins cercles concentriques qui animent une surface ;
- Le diamantage.

Ces structurations de surface peuvent donc être effectuées par des moyens mécaniques (médias abrasifs, brosses, outils) ou des moyens de type laser.

Ces structurations de surface, notamment la première structuration de surface, peuvent avantageusement former une texturation particulière qui se reconnait par la formation d'un profil ou d'un motif particulier. En variante, une structuration de surface peut former toute rugosité particulière, non nécessairement organisée selon un profil bien identifié.

De préférence, la deuxième structuration de surface forme une rugosité inférieure ou égale à la rugosité de la première structuration de surface et/ou forme un écrêtage total ou partiel de la première structuration de surface.

L'étape de deuxième structuration de surface peut réaliser des reliefs de profondeur moyenne inférieure ou égale à la profondeur moyenne de reliefs réalisés par la première structuration de surface.

De façon plus générale, le procédé met en œuvre une première structuration de surface particulière, puis une deuxième structuration de surface qui vient modifier au moins une partie de la première texturation formée par la première structuration de surface. L'invention s'applique à toute superposition de deux texturations, présentant des rugosités différentes. Elle ne se limite pas à une rugosité définissant un motif de décoration particulier, ou un ensemble de stries bien délimitées, mais peut être implémentée à partir de toute rugosité.

Selon une réalisation avantageuse, cette double structuration de surface est réalisée dans une même couche malléable.

Selon une autre réalisation avantageuse, une seule étape de coloration appliquée à la double structuration de surface suffit pour obtenir des effets optiques permettant de distinguer plusieurs zones différentes.

Selon une autre réalisation avantageuse, la deuxième structuration de surface permet d'abaisser le niveau moyen de la surface traitée par la deuxième structuration, tout en conservant le profil initial formé par la première structuration de surface. Cette approche, réalisée par un laser, notamment par un laser à impulsions femtoseconde, présente ainsi l'avantage de conserver un profil d'une rugosité initiale, qui peut par exemple être reconnu à l'œil nu, tout en le modifiant par une deuxième structuration de surface pour le différencier de sa forme initiale.

L'étape de deuxième structuration de surface peut réaliser une rugosité de la surface à traiter inférieure ou égale à la rugosité réalisée par la première structuration de surface.

En remarque, dans tous les cas, la surface supérieure du composant horloger se trouve donc à la surface d'une ou plusieurs couches superposées de matériaux différents ou non, rigides et/ou malléables. Le traitement réalisé par les deux structurations de surface est réalisé de préférence intégralement au sein d'une seule couche supérieure, voire au sein de plusieurs couches de matériaux différents. Toutefois, dans tous les cas, la double structuration de surface n'est pas traversante, c'est-à-dire ne s'étend pas au travers toute l'épaisseur du composant horloger, ne débouche pas au travers de la surface inférieure du composant horloger. La double structuration de surface selon l'invention présente une très faible épaisseur, comme explicité précédemment, qui ne concerne avantageusement qu'une faible épaisseur relativement à l'épaisseur totale du composant horloger, par exemple s'étend sur moins de 50%, voire sur moins de 30%, voire sur moins de 20%, voire sur moins de 10%, voire sur moins de 1%, de cette épaisseur totale. Elle n'a avantageusement aucun effet sur l'opacité ou la transparence du composant horloger. Ainsi, selon un mode de réalisation avantageux, la double structuration selon l'invention est réalisée sur la surface supérieure d'une couche supérieure opaque, qui reste naturellement opaque après réalisation des structurations de surface, et plus généralement de la mise en œuvre de n'importe quel mode de réalisation de l'invention. Autrement dit, les structurations de surface ont un impact négligeable sur l'opacité de la ou des couches supérieures du composant horloger. Cette opacité reste ainsi sensiblement égale au niveau de toute la surface supérieure.

L'invention porte aussi sur un composant horloger obtenu par le procédé de fabrication selon l'invention.

Un tel composant horloger peut être un cadran comprenant au moins deux zones différentes, ces au moins deux zones étant traitées par une deuxième étape de structuration de surface différente pour former des aspects différents permettant de distinguer visuellement lesdites au moins deux zones. A titre d'exemples, les différentes zones peuvent correspondre à des index d'heure. En variante, un tel cadran peut comprendre au moins une zone traitée par au moins une deuxième étape de structuration de surface pour former une coloration différente et/ou une luminosité différente et/ou un effet optique différent permettant de distinguer visuellement la zone traitée par une deuxième étape de structuration de surface de la zone traitée par une première étape de structuration de surface.

L'invention porte aussi sur une pièce d'horlogerie, comme une montre, notamment une montre-bracelet, qui comprend un tel composant horloger.

## Revendications

1. Procédé de fabrication d'un composant horloger comprenant une surface à traiter, cette surface étant optionnellement préalablement préparée par une sous-étape de polissage et/ou par une sous-étape d'ajout d'une couche malléable (2) supérieure, **caractérisé en ce qu'**il comprend les étapes suivantes :
- Première structuration de surface (E10) de ladite surface à traiter du composant horloger, puis
- Deuxième structuration de surface (E20) de ladite surface à traiter structurée par l'étape précédente de première structuration de surface (E10).

2. Procédé de fabrication d'un composant horloger selon la revendication précédente, **caractérisé en ce que** la surface à traiter appartient à une couche supérieure se présentant en un matériau malléable, les étapes de première structuration de surface (E10) et de deuxième structuration de surface (E20) étant en tout ou partie réalisées dans ledit matériau malléable de ladite couche supérieure, et/ou **en ce que** la surface à traiter appartient à une couche supérieure opaque du composant horloger, les étapes de première structuration de surface (E10) et de deuxième structuration de surface (E20) ayant un impact nul ou négligeable sur l'opacité de cette couche supérieure.

3. Procédé de fabrication d'un composant horloger selon la revendication 1 ou 2, **caractérisé en ce que** l'étape de première structuration de surface (E10) et/ou de deuxième structuration de surface (E20) réalise des reliefs de profondeur moyenne inférieure ou égale à 0.1 µm, voire inférieure ou égale à 0.3 µm, voire inférieure ou égale à 0.8 µm, voire inférieure ou égale à 1 µm, voire inférieure ou égale à 1.5 µm, voire inférieure ou égale à 3 µm, voire inférieure ou égale à 4 µm, et/ou de profondeur inférieure à l'épaisseur d'une couche malléable dans laquelle la ou les structurations de surface sont réalisées.

4. Procédé de fabrication d'un composant horloger d'un élément horloger selon l'une des revendications précédentes, **caractérisé en ce que** l'étape de première structuration (E10) et/ou de deuxième structuration de surface (E20) de surface réalise des reliefs de profondeur moyenne supérieure ou égale à 0.05 µm.

5. Procédé de fabrication d'un composant horloger selon l'une des revendications précédentes, **caractérisé en ce que** l'étape de deuxième structuration de surface (E20) réalise des reliefs de profondeur moyenne inférieure ou égale à la profondeur moyenne de reliefs réalisés par la première structuration de surface, ou **en ce que** l'étape de deuxième structuration de surface (E20) réalise une rugosité de la surface à traiter inférieure ou égale à la rugosité réalisée par la première structuration de surface et/ou **en ce que** l'étape de deuxième structuration de surface (E20) forme un écrêtage total ou partiel de la texturation formée par la première structuration de surface et/ou **en ce que** l'étape de deuxième structuration de surface (E20) permet d'abaisser la texturation formée par l'étape de première structuration de surface (E10) sans modifier son profil.

6. Procédé de fabrication d'un composant horloger selon l'une des revendications précédentes, **caractérisé en ce que** l'étape de deuxième structuration de surface (E20) est appliquée sur une partie seulement de la surface traitée par l'étape de première structuration de surface (E10).

7. Procédé de fabrication d'un composant horloger selon l'une des revendications précédentes, **caractérisé en ce qu'**il comprend au moins une étape supplémentaire de troisième structuration de surface, appliquée sur une partie de la surface à traiter ayant subi la première structuration de surface uniquement et/ou sur une partie de la surface à traiter ayant subi la première et la deuxième structurations de surface.

8. Procédé de fabrication d'un composant horloger selon l'une des revendications précédentes, **caractérisé en ce qu'**il comprend ensuite une étape de coloration (E30) de l'entier de la surface à traiter par dépôt d'une couche de matériau, notamment par dépôt CVD, PVD, PLD ou ALD ou par croissance galvanique.

9. Procédé de fabrication d'un composant horloger selon la revendication précédente, **caractérisé en ce que** l'étape de coloration (E30) combinée auxdites au moins deux étapes de structurations de surface (E10 ; E20) induit une coloration différente et/ou une luminosité différente et/ou un effet optique différent sur respectivement au moins deux zones différentes de ladite surface à traiter.

10. Procédé de fabrication d'un composant horloger selon l'une des revendications précédentes, **caractérisé en ce que** la première étape de structuration de surface (E10) consiste en un satinage, un brossage, un colimaçonnage, un soleillage, des Côtes de Genève, un perlage, un cerclage, un giclage, comme un giclage humide, un sablage, ou en une structuration par laser, notamment par laser à impulsions nanoseconde ou femtoseconde et/ou **en ce que** l'étape de deuxième structuration de surface (E20) consiste en un giclage, comme un giclage humide ou un sablage, ou en une structuration par laser, notamment par laser à impulsions nanoseconde ou femtoseconde.

11. Procédé de fabrication d'un composant horloger selon l'une des revendications précédentes, **caractérisé en ce qu'**il comprend une étape préalable consistant à se munir d'un substrat puis à ajouter une couche malléable sur ladite surface à traiter favorisant lesdites étapes de structuration de surface, l'épaisseur de la couche malléable étant inférieure ou égale à 10 µm, voire inférieure ou égale à 6 µm, voire inférieure ou égale à 4 µm, voire inférieure ou égale à 3 µm.

12. Procédé de fabrication d'un composant horloger selon la revendication 2 ou 11, **caractérisé en ce que** la couche malléable comprend de l'argent, ou un alliage comprenant en poids au moins 50% d'argent, ou de l'or, ou un alliage comprenant en poids au moins 50% d'or.

13. Procédé de fabrication d'un composant horloger selon l'une des revendications précédentes, caractérisé en ce ce que l'étape de première structuration de surface (E10) est intégralement réalisée dans l'épaisseur d'une couche malléable comprenant la surface à traiter, et/ou en ce que l'étape de deuxième structuration de surface (E20) est intégralement réalisée dans l'épaisseur d'une couche malléable comprenant la surface à traiter.

14. Procédé de fabrication d'un composant horloger selon l'une des revendications précédentes, **caractérisé en ce qu'**il comprend au moins deux zones distinctes de ladite surface à traiter sur lesquelles l'étape de deuxième structuration de surface est différente, notamment au niveau de la rugosité et/ou de l'orientation.

15. Procédé de fabrication d'un composant horloger selon l'une des revendications précédentes, **caractérisé en ce qu'**il comprend une étape supplémentaire de gravage profond, selon une profondeur supérieure ou égale à 5 µm, voire supérieure ou égale à 10 µm, et/ou supérieure ou égale à l'épaisseur de la couche malléable, de ladite surface à traiter.

16. Procédé de fabrication d'un composant horloger selon l'une des revendications précédentes, **caractérisé en ce qu'**il comprend une étape supplémentaire consistant à déposer une couche polymérique de protection sur ladite surface à traiter, notamment du zapon.

17. Procédé de fabrication d'un composant horloger selon l'une des revendications précédentes, **caractérisé en ce que** l'étape de première structuration de surface et/ou l'étape de deuxième structuration de surface réalise des stries rectilignes ou sensiblement rectilignes ou courbes, ou **en ce que** l'étape de première structuration de surface et l'étape de deuxième structuration de surface réalisent respectivement des stries non parallèles entre elles.

18. Composant horloger obtenu par un procédé selon l'une des revendications précédentes, **caractérisé en ce qu'**il est un cadran ou une lunette.

19. Composant horloger selon la revendication précédente, **caractérisé en ce qu'**il est un cadran comprenant au moins une zone traitée par au moins une deuxième étape de structuration de surface superposée à une première structuration de surface pour former une coloration différente et/ou une luminosité différente et/ou un effet optique différent permettant de distinguer visuellement la zone traitée par la deuxième étape de structuration de surface de la zone traitée par la première étape de structuration de surface sans la deuxième étape de structuration de surface ou **en ce qu'**il est un cadran comprenant deux zones différentes traitées respectivement par deux deuxième étapes de structuration de surface différentes, chacune étant superposée à une première structuration de surface, pour former une coloration différente et/ou une luminosité différente et/ou un effet optique différent permettant de distinguer visuellement lesdites au moins deux zones.

20. Pièce d'horlogerie, comme une montre, notamment une montre-bracelet, **caractérisée en ce qu'**elle comprend un composant horloger selon l'une des revendications 19 ou 20.
